# FASCICULE DE BREVET EUROPEEN

(11) **EP 1 723 351 B1**
(45) Date de publication et mention de la délivrance du brevet: **11.06.2008**
(21) Numéro de dépôt: 05728083.6
(22) Date de dépôt: 28.02.2005
(51) Int. Cl.: F16H 41/24, F16H 45/02, B23K 20/12

(54) **APPAREIL D'ACCOUPLEMENT HYDROCINETIQUE, NOTAMMENT POUR VEHICULE AUTOMOBILE**
HYDROKINETISCHE KUPPLUNGSVORRICHTUNG, INSBESONDERE FÜR KRAFTFAHRZEUG
HYDROKINETIC COUPLING DEVICE, PARTICULARLY FOR A MOTOR VEHICLE

(30) Priorité: 02.03.2004 FR 0450422
(43) Date de publication de la demande: 22.11.2006
(73) Titulaire: Valeo Embrayages, 80000 Amiens Cedex 1 (FR)
(72) Inventeur: ARHAB, Rabah, F-95350 Saint Brice sous Forêt (FR); TERMENON, Norberto, F-80000 Amiens (FR)
(86) Numéro de dépôt international: PCT/FR2005/050130
(87) Numéro de publication internationale: WO 2005/085678

(56) Documents cités:
- DE-C- 4 345 399
- FR-A- 2 732 427
- US-A- 5 533 602
- US-B2- 6 439 361
- US-B2- 6 695 109

## Description

La présente invention concerne un appareil d'accouplement hydrocinétique, notamment pour véhicule automobile.

On connaît déjà de l'état de la technique de nombreux appareils d'accouplement hydrocinétique et on distingue selon les applications différentes conceptions d'appareils, notamment les appareils de type « monoface », « bifaces » ou encore « multidisques ».

On connaît par exemple des documents FR-A-2.825.770 ou FR-A-2.765.938, un appareil d'accouplement hydrocinétique de type « monoface », qui comporte axialement d'avant en arrière :
- un carter formé d'une coquille arrière qui est propre à être liée en rotation à un arbre menant, une roue d'impulseur et une coquille avant ;
- une roue de turbine, solidaire en rotation d'un moyeu de turbine, qui est propre à être liée en rotation à un arbre mené ;
- un embrayage de verrouillage du couplage des arbres menant et mené qui intervient entre la roue de turbine et la coquille arrière et qui comporte un piston, mobile axialement, pour lier de manière débrayable la coquille arrière à l'arbre mené et qui comporte un dispositif d'amortissement,
- le dispositif d'amortissement comportant au moins une rondelle de guidage formant l'élément d'entrée, un voile formant l'élément de sortie et des organes élastiques à action circonférentielle interposés entre les éléments d'entrée et de sortie qui sont liés en rotation avec une capacité de débattement angulaire déterminée,
- et du type dans lequel la roue de turbine, le moyeu de turbine et le voile du dispositif d'amortissement sont liés en rotation par des liaisons sans jeu.

D'une manière générale, les liaisons en rotation sans jeu entre la roue de turbine et le moyeu de turbine ou un élément d'entrée ou de sortie du dispositif d'amortissement, encore appelé amortisseur, sont susceptibles d'être réalisées par tous modes de liaison appropriés et notamment par rivetage, par soudage ou par engrènement.

On distingue ainsi généralement une première liaison sans jeu par l'intermédiaire de laquelle la roue de turbine est solidaire en rotation du moyeu de turbine et une deuxième liaison sans jeu par l'intermédiaire de laquelle le moyeu de turbine est solidaire en rotation d'un élément de l'amortisseur.

Dans le document FR-A-2.825.770, l'appareil d'accouplement hydrocinétique du type « monoface » comporte une première liaison entre la roue de turbine et le moyeu de turbine réalisée par rivetage et une deuxième liaison entre la roue de turbine et le voile de l'amortisseur réalisée par soudage.

En variante, dans le document FR-A-2.765.938, la deuxième liaison entre le moyeu de turbine et le voile de l'amortisseur est aussi réalisée par rivetage.

On connaît aussi des appareils d'accouplement hydrocinétique de type « multidisques » dans lesquels les moyens de liaison sans jeu entre la roue de turbine, le moyeu de turbine et l'élément d'entrée du dispositif d'amortissement sont des rivets axiaux, un tel appareil est par exemple décrit dans le document FR-A-2.839.128.

Cependant, le rivetage est un mode de liaison qui ne donne pas toujours entière satisfaction. Le rivetage présente différents inconvénients et requiert notamment des opérations d'usinage coûteuses pour percer avec précision dans chacune des pièces à lier en rotation les trous pour le passage des corps des rivets.

De plus, les têtes des rivets augmentent l'encombrement axial général de l'appareil et le rivetage, bien que simple à mettre en oeuvre, est un mode de liaison coûteux du fait du temps total nécessaire à la réalisation de toutes les opérations.

Le document US-A-5.975.261 décrit un autre appareil d'accouplement hydrocinétique de type « multidisques » dans lequel la première liaison sans jeu est réalisée par soudage par friction et la deuxième liaison est réalisée par coopération de formes entre, d'une part, des pattes formées dans la rondelle de guidage et, d'autre part, des ouvertures que présente le moyeu de turbine.

Les liaisons sans jeu réalisées par engrènement présentent elles aussi des inconvénients, notamment la mise en oeuvre de traitements et d'usinages précis pour réaliser les parties mâle et femelle complémentaires, et sont donc coûteuses. De plus, un tel mode de liaison ne présente pas une fiabilité suffisante par rapport aux risques d'usures, de sorte que des bruits indésirables sont susceptibles d'apparaître.

C'est pourquoi, le soudage, et plus particulièrement le soudage par friction, est souvent le mode de liaison préféré pour lier solidairement la roue de turbine, le moyeu de turbine et le voile ou une des rondelles de guidage de l'amortisseur.

Toutefois avec le soudage, il est en outre nécessaire que les cordons de soudures soient accessibles, notamment pour permettre des opérations de contrôle et de nettoyage des cordons.

Cependant, dans les conceptions actuelles d'appareil, la roue de turbine, le moyeu de turbine et le voile ne permettent pas de réaliser aisément de telles opérations et donc de garantir la qualité et la fiabilité des liaisons soudées.

Par ailleurs, dans les véhicules automobiles actuels, l'espace disponible pour l'implantation du moteur est de plus en plus faible notamment du fait de l'augmentation des autres organes, de sorte qu'un plus faible encombrement et par conséquent une grande compacité axiale des appareils est systématiquement recherchée.

Plus précisément, dans le cas où le moyeu de turbine est interposé axialement entre la roue de turbine et le voile de l'amortisseur, il est nécessaire de contrôler la première liaison soudée avant qui lie en rotation la roue de turbine au moyeu ainsi que la deuxième liaison arrière qui lie solidairement le moyeu au voile de l'amortisseur.

Or, les conceptions actuellement connues ne permettent pas d'accéder de manière satisfaisante aux cordons de soudure des première et deuxième liaisons, notamment au cordon de soudure interne arrière de la deuxième liaison.

L'invention a notamment pour but de remédier aux inconvénients susnommés et de réaliser un appareil d'accouplement hydrocinétique du type mentionné précédemment qui soit fiable, simple et économique, tant à la fabrication qu'au montage.

Dans ce but, l'invention propose un appareil d'accouplement hydrocinétique du type décrit précédemment, caractérisé en ce que le voile comporte à son extrémité radiale interne une virole qui s'étend axialement vers l'avant entre la roue de turbine et le moyeu de turbine et qui est liée en rotation par soudage par friction respectivement :
- à l'avant, à la roue de turbine, par une première liaison soudée réalisée entre une face annulaire de contact avant de la virole et une face de soudage arrière en vis-à-vis de la périphérie radiale interne de la roue de turbine, et
- à l'arrière, au moyeu de turbine, par une deuxième liaison soudée arrière réalisée entre une face annulaire de contact arrière de la virole et une face de soudage avant en vis-à-vis de la périphérie radiale externe du moyeu de turbine.

Grâce à l'invention, on réalise des liaisons fiables et la mise en oeuvre maîtrisée de la technique du soudage par friction permet d'obtenir une bonne précision lors de l'assemblage de la roue de turbine, du voile et du moyeu de turbine en un sous-ensemble unitaire.

De plus, le soudage par friction est un procédé de fabrication avantageux permettant d'obtenir pour des productions en grandes séries une bonne précision d'assemblage avec une grande répétitivité.

Avantageusement, le sous-ensemble unitaire comporte un espace avant qui est délimité d'une part axialement à l'avant par la face arrière de la roue de turbine et à l'arrière par la face avant du flasque du moyeu de turbine et, d'autre part, délimité radialement vers l'extérieur par la face axiale interne de la virole de manière à permettre un accès aux cordons internes respectivement de la première liaison soudée et de la deuxième liaison soudée, notamment en vue d'effectuer un contrôle visuel et/ou un nettoyage desdits cordons.

Avantageusement, les cordons des soudures sont aisément accessibles ce qui facilite les opérations de contrôle et/ou de nettoyage et réduit le temps auparavant nécessaire pour réaliser ces opérations.

Selon d'autres caractéristiques de l'invention :
- les diamètres moyens des faces annulaires de contact avant et arrière de la virole sont sensiblement égaux ;
- la première liaison soudée, entre la face annulaire de contact transversale avant de la virole et la face transversale de soudage arrière de la roue de turbine, comporte un cordon externe avant de soudure et un cordon interne avant de soudure, la virole du voile s'étendant axialement sur une longueur déterminée de manière à permettre un accès aux cordons respectivement externe et interne de la première liaison soudée, notamment en vue d'effectuer un contrôle visuel et/ou un nettoyage desdits cordons ;
- la deuxième liaison soudée, entre la face annulaire de contact transversale arrière de la virole et la face transversale de soudage avant du moyeu de turbine, comporte un cordon externe arrière de soudure et un cordon interne arrière de soudure (108) ;
- les diamètres moyens des cordons internes de soudure avant et arrière des première et seconde liaisons soudées sont sensiblement égaux ;
- les diamètres moyens des cordons internes de soudure avant et arrière des première et seconde liaisons soudées sont sensiblement égaux au diamètre interne de la virole ;
- le moyeu de turbine comporte un flasque dont la périphérie radiale externe comporte un bossage annulaire qui s'étend axialement vers l'avant et qui porte ladite face de soudage avant du moyeu de turbine ;
- le diamètre moyen du cordon externe arrière de soudure est sensiblement égal au plus grand diamètre externe du flasque du moyeu de turbine ;
- la virole du voile est réalisée par emboutissage.

D'autres caractéristiques et avantages de l'invention apparaîtront à la lecture de la description qui va suivre pour la compréhension de laquelle on se reportera à la figure unique qui représente de manière schématique une demi-vue en coupe axiale d'un appareil d'accouplement hydrocinétique selon l'invention.

Dans la description qui va suivre, les composants identiques, similaires ou analogues seront désignés par les mêmes chiffres de référence.

Afin de faciliter la compréhension de la description et des revendications, on utilisera, à titre non limitatif, des orientations « avant » et « arrière » correspondant respectivement à la gauche et à la droite de la figure et les orientations « axiale - radiale » et « externe/extérieur - interne/intérieur » par rapport à l'axe général de rotation X-X de l'appareil d'accouplement hydrocinétique.

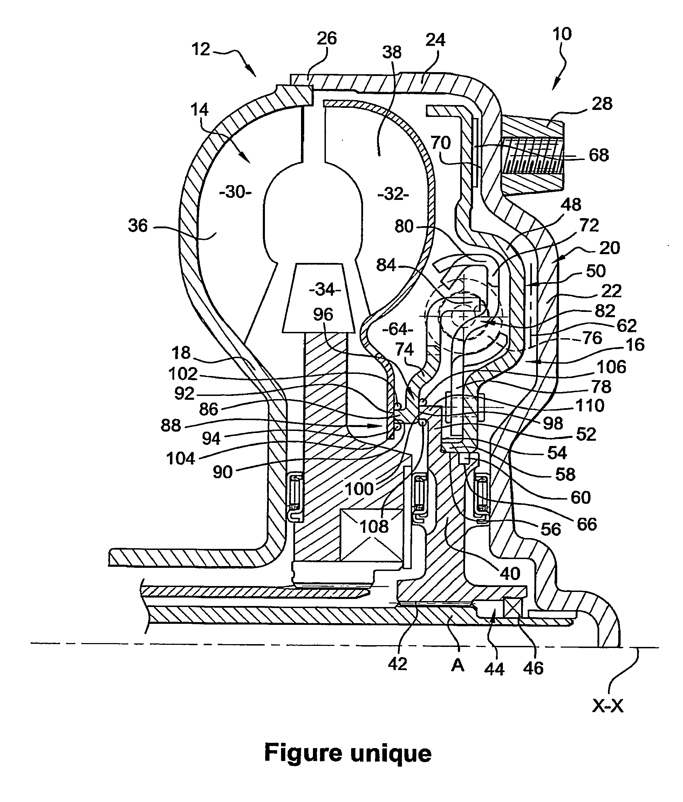

La figure 1 représente un appareil d'accouplement hydrocinétique 10, ici de type « monoface », qui comporte un convertisseur de couple 14 et un embrayage de verrouillage 16, encore dénommé « lock-up », agencés dans un carter 12 étanche rempli d'huile.

Un tel appareil d'accouplement hydrocinétique 10 est destiné à accoupler deux arbres, respectivement menant et mené dans le cas d'une application à une transmission automatique de véhicule automobile. Dans ce cas, l'arbre menant (non représenté) est l'arbre de sortie du moteur du véhicule et l'arbre mené A est relié à des moyens de changement de rapports de vitesses.

Le carter 12 comporte une coquille avant 18 et une coquille arrière 20, qui sont de préférence assemblées de manière étanche par soudage.

La coquille arrière 20 comporte une paroi transversale 22 s'étendant radialement et dont l'extrémité externe se prolonge, après une portion coudée à 90°, par une jupe 24 d'orientation axiale s'étendant vers l'avant. Le bord 26 d'extrémité libre de la jupe est avantageusement conçu pour permettre une liaison par soudage de type laser avec le bord d'extrémité libre de la coquille arrière 20.

La paroi transversale 22 de la coquille arrière 20 du carter 12 comporte sur sa face arrière des moyens de couplage 28 qui sont ici rapportés par soudage à la périphérie radiale de la paroi 22 et qui comportent des moyens formant écrou destinés à recevoir des vis (non représentées) de fixation de l'appareil 10 à un flasque de liaison du moteur (non représenté).

Le convertisseur de couple 14 comporte une roue d'impulseur avant 30, une roue de turbine arrière 32 et une roue de réaction centrale 34.

La roue d'impulseur 30 comporte des aubes 36 qui sont portées par la coquille avant 18 du carter 12 qui est propre à être liée en rotation à l'arbre menant.

La roue de turbine 32 comporte de manière analogue des aubes 38 qui font faces aux aubes 36 de la roue d'impulseur 30.

La roue de turbine 32 est solidaire en rotation d'un moyeu de turbine 40 qui est apte à être lié par des moyens d'entraînement 42 à l'arbre mené A, coaxial à l'axe X-X de l'appareil 10.

Les moyens 42 d'entraînement en rotation intervenant entre le moyeu 40 et l'arbre mené A sont ici réalisés par coopération de formes entre des rainures et des cannelures axiales complémentaires respectivement ménagées sur l'un et l'autre.

Le moyeu 40 et l'arbre A comportent vers l'arrière, plus précisément à droite des moyens d'entraînement 42 et respectivement vers l'intérieur pour le moyeu 40 et vers l'extérieur pour l'arbre A, chacun une rainure qui, une fois le moyeu 40 et l'arbre A accouplés, définissent un logement 44 dans lequel est agencé un joint d'étanchéité 46.

Avantageusement, l'arbre mené A comporte à son extrémité arrière un chanfrein pour faciliter le montage du joint 46.

L'embrayage de verrouillage 16 comporte un piston 48, mobile axialement, pour lier de manière débrayable la roue de turbine 32 à l'arbre mené A, et un dispositif d'amortissement ou amortisseur 50.

La partie radialement externe du moyeu de turbine 40 comporte axialement à l'avant un flasque 52 qui s'étend radialement vers l'extérieur et qui délimite par sa face transversale arrière de butée 54 une portée annulaire 56 de coulissement sur laquelle est montée le piston 48.

Le piston 48, qui s'étend globalement transversalement, comporte à sa périphérie radiale interne une portion en forme de « L » comportant une bague 58 s'étendant axialement vers l'avant qui coopère de manière étanche avec la portée 56 du moyeu 40 qu'elle entoure.

Plus précisément, un moyen d'étanchéité 60, tel qu'un segment ou un joint, est interposé entre la surface interne de la bague 58 du piston 48 et la portée 56 de manière à assurer l'étanchéité entre une première chambre arrière 62, dite chambre de commande, et une seconde chambre avant 64, dite chambre de turbine.

Le moyen d'étanchéité 60 est ici porté par le moyeu 40, en variante par le piston 48, et il est logé dans une gorge annulaire 66 réalisée dans la portée 56.

Avantageusement, la portée 56 comporte, à son extrémité axiale arrière, un chanfrein terminal afin de faciliter le montage par emboîtement dudit moyen d'étanchéité 60.

L'appareil 10 étant de type « monoface », l'embrayage de verrouillage 16 comporte une garniture annulaire de frottement 68 qui est ici portée par la face arrière de la périphérie radiale externe du piston 48 sur laquelle cette garniture 68 est par exemple rapportée par collage et qui est destinée à venir en contact avec une portée de frottement 70 située axialement en vis-à-vis sur la face avant de la paroi transversale 22 de la coquille arrière 20 du carter 12.

De préférence, la garniture de frottement 68 comporte des rainures (non représentées) dont le profil peut varier selon les applications et qui permettent notamment d'améliorer le refroidissement au voisinage de la portée de frottement 70 et de travailler en glissement contrôlé.

L'embrayage de verrouillage 16 du couplage des arbres menant et mené A, qui intervient entre la roue de turbine 32 et la coquille arrière 22, est mis en fonctionnement après démarrage du véhicule et le couplage hydraulique des arbres menant et mené de manière à éviter la perte de rendement induite notamment par des phénomènes de glissement entre les roues de turbine 32 et d'impulseur 30.

Ainsi, au cours d'une première phase de fonctionnement, dite phase convertisseur, le couple de l'arbre menant est transmis à la roue d'impulseur 30 qui entraîne par circulation de l'huile entre les aubes 36 et 38, la roue de turbine 32.

Durant cette phase convertisseur, l'amortisseur 50 n'intervient pas dans l'amortissement des vibrations ou oscillations de torsions issues notamment des acyclismes moteur, lesquelles ne sont pas ou peu transmises puisque la transmission du couple moteur de l'arbre menant à l'arbre mené A est réalisée seulement par l'intermédiaire de l'énergie cinétique de l'huile dans le convertisseur 14.

Au cours d'une seconde phase de fonctionnement, en faisant varier la pression de part et d'autre du piston 48, c'est-à-dire entre les chambres de commande 62 et de turbine 64, on déplace le piston 48 axialement vers l'arrière pour procéder au verrouillage, encore appelé pontage, et réciproquement vers l'avant ensuite pour procéder au déverrouillage, ou encore dépontage.

Ainsi lorsque le piston 48, mu par la pression, se déplace axialement vers l'arrière pour serrer la garniture de frottement 68 contre la portée de frottement 70 de la paroi transversale 22 du carter 12, le couple est transmis de la paroi 22 du carter 12 à la roue de turbine 32 au travers du dispositif d'amortissement 50, et non plus au travers des roues de turbine 32 et d'impulseur 30 du convertisseur 14 comme lors de la phase convertisseur.

Le dispositif d'amortissement 50 de l'embrayage de verrouillage 16 comporte ici un élément d'entrée constitué par une rondelle de guidage 72, un élément de sortie constitué par un voile 74 et des organes élastiques 76 à action circonférentielle interposés entre les éléments d'entrée 72 et de sortie 74 qui sont ainsi liés en rotation avec une capacité de débattement angulaire déterminée.

De manière connue, la rondelle de guidage 72 comporte d'une part une partie radialement interne 78 qui s'étend globalement transversalement et qui est rivetée sur le piston 48 pour assurer la liaison en rotation de l'entrée de l'amortisseur 50 et du piston 48 et, d'autre part, une partie radialement externe 80 présentant globalement une forme de « C » ou de demi-tore et des fenêtres 82 dans lesquelles sont reçus les organes élastiques 76 à action circonférentielle.

Les organes élastiques 76 sont ainsi en appui d'une part sur les bords latéraux des fenêtres 82 et, d'autre part, sur une partie du voile 74.

Le voile 74 comporte à cet effet à sa périphérie radiale externe des pattes 84 qui s'étendent axialement vers l'arrière et contre les faces latérales desquelles les organes élastiques 76 sont en appuis.

La roue de turbine 32, le moyeu de turbine 40 et ici le voile 74 de l'amortisseur 50 sont liés en rotation par des liaisons sans jeu réalisée par soudage, notamment par soudage par friction.

Conformément à l'invention, le voile 74 comporte à son extrémité radiale interne une virole 86 qui s'étend axialement vers l'avant entre la roue de turbine 32 et le moyeu de turbine 40 et qui est respectivement liée en rotation à chacun de ces organes par soudage par friction.

Plus précisément, la virole 86 du voile 74 est liée en rotation par soudage par friction respectivement :
- à l'avant, à la roue de turbine 32, par une première liaison soudée 88 réalisée entre une face annulaire de contact avant 90 de la virole 86 et une face de soudage arrière 92 en vis-à-vis de la périphérie radiale interne 94 de la roue de turbine 32, et
- à l'arrière, au moyeu de turbine 40, par une deuxième liaison soudée 96 réalisée entre une face annulaire de contact arrière 98 de la virole 86 et une face de soudage avant 100 en vis-à-vis de la périphérie radiale externe du flasque 52 moyeu de turbine 40.

Grâce à l'invention, on réalise un sous-ensemble unitaire constitué par la roue de turbine 32, le moyeu de turbine 40 et ici le voile 74 de l'amortisseur 50 dont les cordons internes et externes respectivement de la première liaison soudée et de la deuxième liaison soudée sont facilement accessibles de manière à pouvoir notamment être contrôlés visuellement et/ou nettoyés.

De préférence, on réalise au cours d'une première étape la deuxième liaison soudée puis au cours d'une seconde étape la première liaison soudée.

De plus, les diamètres moyens des faces annulaires de contact avant 90 et arrière 98 de la virole 86 sont sensiblement égaux.

Plus précisément, la première liaison soudée 88, entre la face annulaire de contact transversale avant 90 de la virole 86 et la face transversale de soudage arrière 92 de la roue de turbine 32, comporte un cordon externe avant de soudure 102 et un cordon interne avant de soudure 104, la virole 86 du voile 74 s'étendant axialement sur une longueur déterminée de manière à permettre un accès aux cordons respectivement externe 102 et interne 104 de la première liaison soudée 88, notamment en vue d'effectuer un contrôle visuel et/ou un nettoyage desdits cordons.

De même, la deuxième liaison soudée 96, entre la face annulaire de contact transversale arrière 98 de la virole 86 et la face transversale de soudage avant 100 du moyeu de turbine 40, comporte un cordon externe arrière de soudure 104 et un cordon interne arrière de soudure 106.

Avantageusement, les diamètres moyens des cordons internes de soudure avant 104 et arrière 108 des première et seconde liaisons soudées 88, 96 sont sensiblement égaux de manière à faciliter plus particulièrement l'accès par l'arrière au cordon de soudure externe de la seconde liaison.

Les diamètres moyens des cordons internes de soudure avant 104 et arrière 108 des première et seconde liaisons soudées 88, 96 sont de préférence sensiblement égaux au diamètre interne de la virole 86 de sorte que les cordons internes des première et deuxième liaisons soient agencés sensiblement dans le plan de la face interne de la virole et puissent être ainsi aisément contrôlés et/ou nettoyés.

Le flasque 52 du moyeu de turbine 40 comporte à sa périphérie radiale externe un bossage annulaire 110 qui s'étend axialement vers l'avant et qui porte ladite face de soudage avant 100 du moyeu de turbine 40.

Le diamètre moyen du cordon externe arrière de soudure 106 est sensiblement égal au plus grand diamètre externe du flasque 52 du moyeu de turbine 40, c'est-à-dire au diamètre externe de la l'extrémité radiale du flasque 52 ou du bossage 100.

Le voile 74 est une pièce réalisée en tôle ou matériau analogue de sorte que la virole 86 est avantageusement réalisée par emboutissage.

Bien entendu, la mise en oeuvre de la présente invention ne se limite pas à un appareil d'accouplement hydrocinétique dont l'embrayage de verrouillage est de type « monoface ».

Ainsi, les enseignements pourraient être transposés à des appareils d'accouplement hydrocinétique dans lesquels l'embrayage de verrouillage est du type « bifaces », c'est-à-dire dans lequel l'embrayage de verrouillage comporte notamment un disque de friction destiné à être serré axialement par le piston contre la paroi transversale de la coquille arrière du carter à laquelle ledit piston est lié en rotation avec mobilité axiale ou dans lesquels l'embrayage de verrouillage est du type « multidisques », encore appelés « à trois voies » par comparaison aux types « monoface » et « bifaces » qui n'en comportent que deux.

Pour plus de détails sur la réalisation et le fonctionnement de ces appareils, on se reportera par exemple aux documents suivants FR-A-2.748.539, FR-A-2.814.790 ou FR-A-2.816.019 pour des appareils de type « bifaces » et pour des appareils du type multidisques aux documents FR-A-2.839.128 ou FR-A-2.843.433.

## Revendications

1. Appareil d'accouplement hydrocinétique (10), notamment pour véhicule automobile, du type comportant axialement d'avant en arrière :
- un carter (12) formé d'une coquille arrière (20) qui est propre à être liée en rotation à un arbre menant, une roue d'impulseur (30) et une coquille avant (18) ;
- une roue de turbine (32), solidaire en rotation d'un moyeu de turbine (40), qui est propre à être liée en rotation à un arbre mené (A) ;
- un embrayage de verrouillage (16) du couplage des arbres menant et mené (A), qui intervient entre la roue de turbine (32) et la coquille arrière (20), et qui comporte un piston (48), mobile axialement, pour lier de manière débrayable la coquille arrière (20) à l'arbre mené (A) et qui comporte un dispositif d'amortissement (50),
- le dispositif d'amortissement (50) comportant au moins une rondelle de guidage (72) formant l'élément d'entrée, un voile (74) formant l'élément de sortie et des organes élastiques (76) à action circonférentielle interposés entre les éléments d'entrée (72) et de sortie (74) qui sont liés en rotation avec une capacité de débattement angulaire déterminée,
- et du type dans lequel la roue de turbine (32), le moyeu de turbine (40) et le voile (74) du dispositif d'amortissement (50) sont liés en rotation par des liaisons sans jeu,
**caractérisé en ce que** le voile (74) comporte à son extrémité radiale interne une virole (86) qui s'étend axialement vers l'avant entre la roue de turbine (32) et le moyeu de turbine (40) et qui est liée en rotation par soudage par friction respectivement :
- à l'avant, à la roue de turbine (32), par une première liaison soudée (88) réalisée entre une face annulaire de contact avant (90) de la virole (86) et une face de soudage arrière (92) en vis-à-vis de la périphérie radiale interne de la roue de turbine (32), et
- à l'arrière, au moyeu de turbine (40), par une deuxième liaison soudée arrière (96) réalisée entre une face annulaire de contact arrière (98) de la virole (86) et une face de soudage avant (100) en vis-à-vis de la périphérie radiale externe du moyeu de turbine (40).

2. Appareil selon la revendication 1, **caractérisé en ce que** les diamètres moyens des faces annulaires de contact avant (90) et arrière (98) de la virole (86) sont sensiblement égaux.

3. Appareil selon l'une des revendications 1 ou 2, **caractérisé en ce que** la première liaison soudée (88), entre la face annulaire de contact transversale avant (90) de la virole (86) et la face transversale de soudage arrière (92) de la roue de turbine (32), comporte un cordon externe avant de soudure (102) et un cordon interne avant de soudure (104), la virole (86) du voile (74) s'étendant axialement sur une longueur déterminée de manière à permettre un accès aux cordons respectivement externe (102) et interne (104) de la première liaison soudée (88), notamment en vue d'effectuer un contrôle visuel et/ou un nettoyage desdits cordons (102, 104).

4. Appareil selon l'une des revendications 1 à 3, **caractérisé en ce que** la deuxième liaison soudée (96), entre la face annulaire de contact transversale arrière (98) de la virole (86) et la face transversale de soudage avant (100) du moyeu de turbine (40), comporte un cordon externe arrière de soudure (106) et un cordon interne arrière de soudure (108).

5. Appareil selon l'une des revendications 3 ou 4, **caractérisé en ce que** les diamètres moyens des cordons internes de soudure avant (104) et arrière (108) des première et seconde liaisons soudées (88, 96) sont sensiblement égaux.

6. Appareil selon la revendication 5, **caractérisé en ce que** les diamètres moyens des cordons internes de soudure avant (104) et arrière (108) des première et seconde liaisons soudées (88, 96) sont sensiblement égaux au diamètre interne de la virole (86).

7. Appareil selon l'une quelconque des revendications précédentes, **caractérisé en ce que** le moyeu de turbine (40) comporte un flasque (52) dont la périphérie radiale externe comporte un bossage annulaire (110) qui s'étend axialement vers l'avant et qui porte ladite face de soudage avant (100) du moyeu de turbine (40).

8. Appareil selon l'une des revendications 4 à 6 prise en combinaison avec la revendication 7, **caractérisé en ce que** le diamètre moyen du cordon externe arrière de soudure (106) est sensiblement égal au plus grand diamètre externe du flasque (52) du moyeu de turbine (40).

9. Appareil selon l'une quelconque des revendications précédentes, **caractérisé en ce que** la virole (86) du voile (74) est réalisée par emboutissage.

## Claims

1. Hydrokinetic coupling apparatus (10), especially for a motor vehicle, of the type comprising, considered axially from front to rear:
- a casing (12) consisting of a rear shell (20) which is adapted to be coupled in rotation to a driving shaft, an impulse wheel (30), and a front shell (18);
- a turbine wheel (32), which is arranged for rotation with a turbine hub (40), which is adapted to be coupled in rotation to a driven shaft (A);
- a lock-up clutch (16) for coupling the driving shaft and the driven shaft together, which is operatively interposed between the turbine wheel (32) and the rear shell (20) and comprises a piston (48), which is movable axially for releasably coupling together the rear shell (20) and the driven shaft (A), and which includes a damping device (50),
- the damping device (50) comprising at least one guide ring (72) which constitutes the input element, a damper plate (74) constituting the output element, and circumferentially acting elastic members (76) interposed between the input element (72) and output element (74), which are coupled together in rotation but with the ability to perform predetermined circumferential displacement,
- and of the type in which the turbine wheel (32), the turbine hub (40) and the damper plate (74) of the damping device (50) are coupled in rotation by means of, connections without play
**characterised in that** the damper plate (74) comprises at its inner radial end a flange portion (86) which extends axially forward between the turbine wheel (32) and the turbine hub (40), and which is coupled in rotation, by friction welding, respectively:
- at the front, to the turbine wheel (32) by means of a first welded joint (88) formed between an annular front contact face (90) of the flange portion (86) and a rear weld face (92) in facing relationship with the inner radial periphery of the turbine wheel (32), and
- at the rear, to the turbine hub (40) through a rear second welded joint (96) formed between an annular rear contact face (98) of the flange portion (86) and a front weld face (100) in facing relationship with the outer radial periphery of the turbine hub (40).

2. Apparatus according to Claim 1, **characterised in that** the mean diameters of the annular contact faces, namely the front contact face (90) and rear contact face (98), of the flange portion (86) are substantially equal to each other.

3. Apparatus according to Claim 1 or Claim 2, **characterised in that** the first welded joint (88), between the annular front transverse contact face (90) of the flange portion (86) and the transverse rear weld face (92) of the turbine wheel (32), comprises an outer front weld band (102) and an inner front weld band (104), the flange portion (86) of the damper plate (74) extending axially over a predetermined length such as to permit access to the outer weld band (102) and inner weld band (104), respectively, of the first welded joint (88), in particular with a view to performing visual control and/or cleaning of the said bands (102, 104).

4. Apparatus according to one of Claims 1 to 3, **characterised in that** the second welded joint (96), between the annular rear transverse contact face (98) of the flange portion (86) and the front transverse weld face (100) of the turbine hub (40), comprises a rear outer weld band (106) and a rear inner weld band (108).

5. Apparatus according to Claim 3 or Claim 4, **characterised in that** the mean diameters of the front inner weld band (104) and rear inner weld band (108) of the first and second welded joints (88, 96) are substantially equal to each other.

6. Apparatus according to Claim 5, **characterised in that** the mean diameters of the front inner weld band (104) and the rear inner weld band (108) of the first and second welded joints (88, 96) are substantially equal to the internal diameter of the flange portion (86).

7. Apparatus according to any one of the preceding Claims, **characterised in that** the turbine hub (40) includes a radial plate portion (52), the outer radial periphery of which includes an annular boss (110) which extends axially forward and which carries the said front weld face (100) of the turbine hub (40).

8. Apparatus according to one of Claims 4 to 6 taken in combination with Claim 7, **characterised in that** the mean diameter of the rear outer weld band (106) is substantially equal to the greatest external diameter of the radial plate portion (52) of the turbine hub (40).

9. Apparatus according to any one of the preceding Claims, **characterised in that** the flange portion (86) of the damper plate (74) is press-formed.

## Patentansprüche

1. Hydrodynamischer Momentwandler (10), insbesondere für ein Kraftfahrzeug, umfassend axial von vorne nach hinten:
- ein Gehäuse (12), gebildet aus einer hinteren Schale (20), die drehfest mit einer Antriebswelle verbunden werden kann, ein Pumpenrad (30) und eine vordere Schale (18);
- ein drehfest mit einer Turbinennabe (40) verbundenes Turbinenrad (32), das drehfest mit einer Abtriebswelle (A) verbunden werden kann;
- eine Überbrückungskupplung (16) zur Kopplung der Antriebswelle und der Abtriebswelle (A), die zwischen dem Turbinenrad (32) und der hinteren Schale (20) eingreift und die einen Kolben (48) aufweist, der axial beweglich ist, um auskuppelbar die hintere Schale (20) mit der Abtriebswelle (A) zu verbinden, und der eine Dämpfvorrichtung (50) aufweist,
- wobei die Dämpfvorrichtung (50) mindestens eine das Eingangselement bildende Führungsscheibe (72), einen das Ausgangselement bildenden Flansch (74) und in Umfangsrichtung wirksame elastische Organe (76) umfasst, die eingefügt sind zwischen das Eingangselement (72) und das Ausgangselement (74), welche mit der Fähigkeit zu einer begrenzten winkelmäßigen Auslenkung drehfest miteinander verbunden sind,
- und wobei das Turbinenrad (32), die Turbinennabe (40) und der Flansch (74) der Dämpfvorrichtung durch spielfreie Verbindungen drehfest miteinander verbunden sind,
**dadurch gekennzeichnet, dass** der Flansch (74) an seinem radial inneren Ende einen Prägering (86) aufweist, der sich axial nach vorne zwischen dem Turbinenrad (32) und der Turbinennabe (40) erstreckt und der jeweils durch Reibschweißen drehfest verbunden ist:
- nach vorne mit dem Turbinenrad (32) durch eine erste Schweißverbindung (88), die zwischen einer vorderen ringförmigen Kontaktfläche (90) des Prägerings (86) und einer gegenüberliegenden hinteren Schweißfläche (92) des radial inneren Bereichs des Turbinenrads (32) ausgeführt ist, und
- nach hinten mit der Turbinennabe (40) durch eine hintere zweite Schweißverbindung (96), die zwischen einer hinteren ringförmigen Kontaktfläche (98) des Prägerings (86) und einer gegenüberliegenden vorderen Schweißfläche (100) des radial äußeren Bereichs der Turbinennabe (40) ausgeführt ist.

2. Momentwandler nach Anspruch 1, **dadurch gekennzeichnet, dass** die mittleren Durchmesser der vorderen (90) und hinteren (98) ringförmigen Kontaktflächen des Prägerings (86) in etwa gleich sind.

3. Momentwandler nach einem der Ansprüche 1 oder 2, **dadurch gekennzeichnet, dass** die erste Schweißverbindung (88) zwischen der vorderen ringförmigen Quer-Kontaktfläche (90) des Prägerings (86) und der hinteren Quer-Schweißfläche (92) des Turbinenrads (32) einen äußeren vorderen Schweißnahtstrang (102) und einen inneren vorderen Schweißnahtstrang (104) aufweist, wobei sich der Prägering (86) des Flanschs (74) axial über eine Länge erstreckt, die bemessen ist, um einen Zugang jeweils zu dem äußeren (102) und inneren (104) Strang der ersten Schweißverbindung (88) zu erlauben, insbesondere im Hinblick auf die Durchführung einer visuellen Kontrolle und/oder eine Reinigung der besagten Stränge (102, 104).

4. Momentwandler nach einem der Ansprüche 1 bis 3, **dadurch gekennzeichnet, dass** die zweite Schweißverbindung (96) zwischen der hinteren ringförmigen Quer-Kontaktfläche (98) des Prägerings (86) und der vorderen Quer-Schweißfläche (100) der Turbinennabe (40) einen äußeren hinteren Schweißnahtstrang (106) und einen inneren hinteren Schweißnahtstrang (108) aufweist.

5. Momentwandler nach einem der Ansprüche 3 oder 4, **dadurch gekennzeichnet, dass** die mittleren Durchmesser der vorderen (104) und hinteren (108) inneren Schweißnahtstränge der ersten und zweiten Schweißverbindung (88, 96) in etwa gleich sind.

6. Momentwandler nach Anspruch 5, **dadurch gekennzeichnet, dass** die mittleren Durchmesser der vorderen (104) und hinteren (108) Schweißnahtstränge der ersten und zweiten Schweißverbindung (88, 96) in etwa gleich mit dem inneren Durchmesser des Prägerings (86) sind.

7. Momentwandler nach einem der vorherigen Ansprüche, **dadurch gekennzeichnet, dass** die Turbinennabe (40) einen Flansch (52) aufweist, dessen radial äußerer Umfang einen ringförmigen Vorsprung (110) aufweist, der sich axial nach vorne erstreckt und der die besagte vordere Schweißfläche (100) der Turbinennabe (40) trägt.

8. Momentwandler nach einem der Ansprüche 4 bis 6 in Kombination mit Anspruch 7, **dadurch gekennzeichnet, dass** der mittlere Durchmesser des äußeren hinteren Schweißnahtstrangs (106) in etwa gleich mit dem größten Außendurchmesser des Flanschs (52) der Turbinennabe (40) ist.

9. Momentwandler nach einem der vorherigen Ansprüche, **dadurch gekennzeichnet, dass** der Prägering (86) des Flanschs (74) durch Ziehen ausgeführt ist.
